# EUROPÄISCHE PATENTANMELDUNG

(11) **EP 1 462 296 A2**
(43) Veröffentlichungstag der Anmeldung: **29.09.2004**
(21) Anmeldenummer: 04004166.7
(22) Anmeldetag: 25.02.2004
(51) Int. Cl.: B60K 37/00

(54) **Lenksäulenmodul**

(30) Priorität: 24.03.2003 DE 10313815
(71) Anmelder: Valeo Schalter und Sensoren GmbH, 74321 Bietigheim-Bissingen (DE)
(72) Erfinder: Mozer, Reiner, 71665 Vaihingen / Enz (DE); Krüger, Andreas, 71636 Ludwigsburg (DE); Horst, Daniel, 74321 Bietigheim-Bissingen (DE); Beuttenmüller, Frank, 74321 Bietigheim-Bissingen (DE); Flock, Roland, 71336 Waiblingen (DE)
(74) Vertreter: Dreiss, Fuhlendorf, Steimle & Becker

(57) **Zusammenfassung**

Die Erfindung betrifft ein Lenksäulenmodul, insbesondere für Kraftfahrzeuge, mit einem auf die Lenksäule aufsetzbaren Modulträger und mit mindestens einem mit dem Modulträger verbindbaren Betätigungsmodul, wobei der Modulträger mindestens zwei jeweils zur Aufnahme eines Betätigungsmoduls geeignete Aufnahmebereiche aufweist, und wobei das Betätigungsmodul einen Eingriffsbereich zum Eingriff in einen Aufnahmebereich des Modulträgers aufweist, wobei der Eingriffsbereich des Betätigungsmoduls kompatibel mit mindestens zwei Aufnahmebereichen des Modulträgers ist.

## Beschreibung

Die Erfindung betrifft ein Lenksäulenmodul, insbesondere für Kraftfahrzeuge, mit einem auf die Lenksäule aufsetzbaren Modulträger und mit mindestens einem mit dem Modulträger verbindbaren Betätigungsmodul, wobei der Modulträger mindestens zwei jeweils zur Aufnahme eines Betätigungsmoduls geeignete Aufnahmebereiche aufweist, und wobei das Betätigungsmodul einen Eingriffsbereich zum Eingriff in einen Aufnahmebereich des Modulträgers aufweist. Die Erfindung betrifft außerdem einen Lenkstockschalter für einen Modulträger eines Lenksäulenmoduls sowie einen Modulträger eines Lenksäulenmoduls.

Ein Lenksäulenmodul der eingangs genannten Art ist aus der DE 196 27 767 A1 bekannt. Dort ist ein Lenkstockschaltersystem beschrieben, das aus mehreren Funktionsmodulen aufgebaut ist, wobei einzelne Funktionsmodule einfach austauschbar sind.

Obwohl das in der DE 196 27 767 A1 beschriebene Lenkstockschaltersystem eine einfache Anpassung des Lenkstockschalters an die gegebenen Funktions- und Designerfordernisse ermöglicht und eine einfache Instandsetzung durch Austausch des defekten Funktionsmoduls gegeben ist, besteht Bedarf an einem Lenksäulenmodul, mit dem die erwähnten Vorteile erhalten bleiben, jedoch die Teilevielfalt weiter reduziert werden kann.

Diese Aufgabe wird dadurch gelöst, dass der Eingriffsbereich des Betätigungsmoduls kompatibel mit mindestens zwei Aufnahmebereichen des Modulträgers ist.

Der Eingriffsbereich eines Betätigungsmoduls ist derart gestaltet, dass er nicht nur in einen bestimmten Aufnahmebereich des Modulträgers einsetzbar und mit diesem kompatibel ist, sondern in mindestens zwei Aufnahmebereiche am Modulträger einsetzbar und mit diesen kompatibel ist. Hierdurch wird erreicht, dass ein und dasselbe Betätigungsmodul verschiedene Relativlagen zu dem Modulträger einnehmen kann, wobei der Modulträger auf die Lenksäule eines Kraftfahrzeugs aufsetzbar ist. Durch diese Kompatibilität des Betätigungsmoduls mit verschiedenen Aufnahmebereichen des Modulträgers kann ein Betätigungsmodul kunden-, länder- und/oder fahrzeugspezifisch mit einem entsprechenden Modulträger kombiniert werden. Hierdurch wird eine erhebliche Reduzierung der Teilevielfalt erreicht. Beispielsweise kann das Betätigungsmodul als Lenkstockschalter mit Blinkfunktion ausgebildet sein, der aus Sichtrichtung des Kraftfahrzeugfahrers auf der rechten oder auf der linken Seite des Modulträgers angeordnet sein kann. Auch eine spätere Umrüstung eines Fahrzeugs, beispielsweise für einen neuen Eigentümer oder für ein anderes Einsatzland, ist problemlos möglich, indem das Betätigungsmodul beispielsweise aus einem Aufnahmebereich entfernbar ist und in einem anderen Aufnahmebereich einsetzbar ist. Hierfür ist weder der Einsatz neuer Betätigungsmodule noch der Umbau und/oder der Austausch eines Modulträgers erforderlich. Es können somit erhebliche Kosten eingespart werden.

Nach einer Weiterbildung der Erfindung ist es vorteilhaft, dass die Eingriffsbereiche von mindestens zwei Betätigungsmodulen identisch sind. Dies erlaubt es, dass jeder der Eingriffsbereiche der mindestens zwei Betätigungsmodule kompatibel mit jedem der mindestens zwei Aufnahmebereiche des Modulträgers ist. Beispielsweise kann ein erstes Betätigungsmodul als Lenkstockschalter mit Blinkfunktion und ein zweites Betätigungsmodul als Lichtschalter ausgebildet sein. Der erfindungsgemäße modulare Aufbau des Lenksäulenmoduls erlaubt es, dass jeder der genannten Lenkstockschalter mit mehreren Aufnahmebereichen des Modulträgers kompatibel ist. Beispielsweise kann der Lenkstockschalter mit Blinkfunktion auf der vom Fahrer aus gesehen linken Seite und der Lenkstockschalter mit Lichtfunktion auf der vom Fahrer aus gesehen rechten Seite des Modulträgers angeordnet werden. Ist zu einem späteren Zeitpunkt gewünscht und/oder beispielsweise aus gesetzlichen Gründen erforderlich, dass die Betätigungsmodule beziehungsweise Lenkstockschalter andersartig angeordnet sein müssen, können die Betätigungsmodule; also beispielsweise der Lenkstockschalter mit Blink- beziehungsweise Lichtfunktion, in ihrer Lage getauscht werden. Ein kostenintensiver Einsatz von Tausch-, Ersatz- und/oder Adapterteilen ist nicht erforderlich.

Für eine weitere Reduzierung der Teilevielfalt ist es vorteilhaft, dass die nach außen nicht sichtbaren Teile von mindestens zwei Betätigungsmodulen identisch sind. Die Betätigungsmodule können also zumindest einige identische Teile aufweisen, was die Herstellkosten senkt, die Ersatzteilversorgung erleichtert oder auch den beispielsweise für den Test von Prototypen erforderlichen Aufwand verringert.

Die nach außen sichtbaren Teile von mindestens zwei Betätigungsmodulen können kundenspezifisch ausgebildet sein. Somit kann weitestgehend auf Gleichteile zurückgegriffen werden, die design- und/oder haptikrelevanten Komponenten können jedoch kundenspezifisch ausgebildet sein. Dies ermöglicht sowohl den Einsatz für verschiedene Kunden als auch die Anpassung der Symbolik an verschiedene Funktionsbelegungen der Betätigungsmodule und/oder an verschiedene Sprachen.

Die nach außen sichtbaren Teile können austauschbar sein, so dass ein Betätigungsmodul im Wesentlichen identisch übernommen werden kann und an einen neuen Einsatzort anpassbar ist, ohne dass gleich das gesamte Betätigungsmodul ausgetauscht werden muss.

Mindestens zwei Betätigungsmodule können auch identisch sein. Dies bedeutet, dass jedes der mindestens zwei Betätigungsmodule mit verschiedenen Aufnahmebereichen des Modulträgers kompatibel ist, somit relativ zum Modulträger verschiedene Lagen einnehmen kann und statt zwei unterschiedlichen Betätigungsmodulen mit zwei Teilenummern zwei zueinander identische Betätigungsmodule mit der gleichen Teilenummer Verwendung finden können. Dies trägt zu einer erheblichen Reduzierung hinsichtlich Kosten und Logistik bei.

Es ist darüber hinaus vorteilhaft, dass die Aufnahmebereiche des Modulträgers identisch sind. Je mehr Aufnahmebereiche der Modulträger aufweist, desto mehr Positionierungsmöglichkeiten bieten sich für das oder die Betätigungsmodul(e). Eine identische Ausbildung bedeutet nicht, dass die Aufnahmebereiche in jedem Detail exakt baugleich ausgeführt sein müssen. Es genügt, wenn der für die Aufnahme eines Eingriffsbereichs eines Betätigungsmoduls relevante Abschnitt des Aufnahmebereichs dahingehend identisch ausgebildet ist, dass ein Betätigungsmodul in jedem der Aufnahmebereiche einsetzbar ist beziehungsweise mehrere Betätigungsmodule an verschiedenen Stellen relativ zum Modulträger anordenbar sind.

Nach einer vorteilhaften Weiterbildung der Erfindung ist der Modulträger als Druckgussteil ausgebildet. Eine solche Ausführung genügt einerseits den Anforderungen an eine einfache Herstellbarkeit eines geometrisch komplexen Bauteils und sie genügt andererseits den Anforderungen an die vor allen Dingen im Bereich der Nutzfahrzeuge erforderliche Langlebigkeit.

Die Aufnahmebereiche des Modulträgers können eine Schwalbenschwanz- oder T-Nut aufweisen, in die ein Betätigungsmodul mit seinem Eingriffsbereich einführbar ist. Es ist auch möglich, dass der Eingriffsbereich eines Betätigungsmoduls eine Schwalbenschwanz- oder T-Nut aufweist, in die ein Aufnahmebereich des Modulträgers einführbar ist. Die genannten Ausführungsformen bieten den Vorteil, dass ein Betätigungsmodul sicher am Modulträger festgehalten werden kann und dennoch leicht, das heißt aus nur einer Montagerichtung, am Modulträger montierbar ist. Die seitlichen Wangen der Schwalbenschwanz- oder der T-Nut umgreifen dabei das entsprechende Gegenstück (Feder) der Verbindung aus Betätigungsmodul und Modulträger.

Es ist darüber hinaus vorteilhaft, dass der Modulträger zur Aufnahme von elektrischen Kontakten zu dem mindestens einen Modul und/oder von Zündschloss und/oder Zündanlassschalter und/oder Lenkradverriegelung und/oder einer Elektronikeinheit und/oder einer Wickelkassette und/oder Drehmoment- und/oder Lenkwinkelsensoren und/oder Verkleidungsteilen geeignet ist und/oder diese Elemente aufweist. Die genannten Elemente können entweder über die erfindungsgemäßen Eingriffs- beziehungsweise Aufnahmebereiche mit dem Modulträger verbunden sein, also an diesem montiert sein, für die genannten Elemente können jedoch auch jeweils spezifische Verbindungen vorgesehen sein.

Es ist besonders vorteilhaft, wenn die Verkleidungsteile einen Eingriffsbereich aufweisen, der für das Einsetzen in einen Aufnahmebereich des Modulträgers geeignet ist, da somit der Modulträger nachträglich hochrüstbar ist, indem das Verkleidungsteil entfernt und ein neues Betätigungsmodul an der gleichen Stelle eingesetzt wird. Somit kann beispielsweise eine ursprünglich nicht vorgesehene Funktion, wie zum Beispiel eine Geschwindigkeitsregelvorrichtung, nachträglich realisiert werden. Dies erlaubt beispielsweise eine Aufwertung von Altfahrzeugen.

Es ist besonders vorteilhaft, dass mit oder sich an die Einführung eines Eingriffsbereichs in einen Aufnahmebereich anschließend eine elektrische Kontaktierung des mindestens einen Betätigungsmoduls und des Modulträgers erfolgt.

Beispielsweise ist das Betätigungsmodul mit einem Steckerbereich versehen, der mit einem Steckeraufnahmebereich am Modulträger verbindbar ist, wobei die Verbindung durch die Einführung des Betätigungsmoduls mit seinem Eingriffsbereich in einen Aufnahmebereich am Modulträger erfolgt. Beispielsweise kann die elektrische Steckverbindung an der Stirnseite eines Betätigungsmoduls, beispielsweise eines Lenkstockschalters, vorgesehen sein und das Betätigungsmodul über die bereits beschriebene Schwalbenschwanz- oder T-Nut-Verbindung in einen Aufnahmebereich des Modulträgers eingeführt werden. Die Einführbewegung abschließend erfolgt eine elektrische Kontaktierung zwischen dem an der Stirnseite des Betätigungsmoduls vorgesehenen Stecker und der am Modulträger an entsprechender Stelle vorgesehenen Steckeraufnahme. Der Vorteil dieser Anordnung ist, dass sowohl die mechanische als auch die elektrische Verbindung mit einem Arbeitsgang herstellbar ist.

In weiterer Ausgestaltung der Erfindung sind die Funktionen des mindestens einen Betätigungsmoduls frei programmierbar. Dies bedeutet, dass nicht von vornherein festgelegt sein muss, welche Funktion ein Betätigungsmodul anzusteuern hat. Beispielsweise kann ein Betätigungsmodul sowohl Licht- als auch Blinkfunktionen verwirklichen. Nach der Montage des Betätigungsmoduls am Modulträger können die Funktionen, die von einem bestimmten Betätigungsmodul angesteuert werden sollen, programmiert werden.

Vorteilhafterweise erfolgt die Programmierung über eine Schnittstelle am Modulträger. Dies ermöglicht es, dass mehrere Betätigungsmodule, die am Modulträger befestigt sind, über eine gemeinsame Schnittstelle programmiert werden können. Als mögliche Standards können hierfür CAN, J1850, TTPS, Flexray oder andere Standards Verwendung finden.

Für eine besonders einfache Wartung ist es vorteilhaft, dass die Schnittstelle am Modulträger mit elektrischen Kontakten zu dem mindestens einen Betätigungsmodul und/oder einer Elektronikeinheit in Verbindung steht. Durch diese Anordnung kann eine Umprogrammierung an der Schnittstelle des Modulträgers erfolgen, ohne dass elektrische Verbindungen zu den Modulträgern ausgetauscht oder geändert werden müssen. Die Elektronikeinheit kann als Speicher für kundenspezifische und/oder betätigungsmodulspezifische Software dienen, die durch die Schnittstelle am Modulträger auf neue Softwareversionen umgestellt werden kann.

Das mindestens eine Betätigungsmodul ist vorteilhafterweise als Lenkstockschalter ausgebildet, dessen Funktionen teilweise oder sämtlich über Tastschalter betätigbar sind.

Eine solche Auslegung des Betätigungsmoduls hat den Vorteil, dass für verschiedene Funktionen (also beispielsweise Blinker, Licht, Wischer, Horn, Retarder, Abstandsregeltempomat) das gleiche Betätigungsmodul verwendbar ist. Die Ansteuerung der einzelnen Funktionen erfolgt durch Auslenkung eines Bedienelements aus einer Ruhelage, wobei der Schalter nach der Betätigung wieder in seine Ruhelage zurückkehren kann. Eine solche tastende Betätigung kann ausgehend aus einer Ruhelage in nur eine oder beispielsweise auch in zwei entgegengesetzte Betätigungsrichtungen erfolgen. Zur Anwahl von Funktionen, die nicht digital (an oder aus) darstellbar sind, sondern unterschiedliche Intensitäten haben können, kann ein Tastschalter mehrmals aufeinander folgend in der gleichen Richtung betätigt werden, beispielsweise um eine Wischfunktion in den Stufen "langsam", "mittel", "schnell" durch einmaliges, zweimaliges beziehungsweise dreimaliges Betätigen einstellen zu können. Die über Tastschalter betätigbaren Funktionen des Lenkstockschalters können frei programmiert werden, so dass der Einsatz eines Lenkstockschalters für mehrere Funktionsbereiche möglich ist, ohne dass mehrere, verschiedenartige Lenkstockschalter vorgehalten werden müssen.

Weitere vorteilhafte Ausgestaltungen und Einzelheiten der Erfindung sind der folgenden Beschreibung zu entnehmen, in der die Erfindung anhand des in der Zeichnung dargestellten Ausführungsbeispiels näher beschrieben und erläutert ist.

In der Zeichnung zeigt:
- Figur 1: eine perspektivische Ansicht eines Lenksäulenmoduls mit einem Modulträger und zwei Betätigungsmodulen in einem Vormontagezustand; und
- Figur 2: das Lenksäulenmodul gemäß Figur 1 in einem Endmontagezustand.

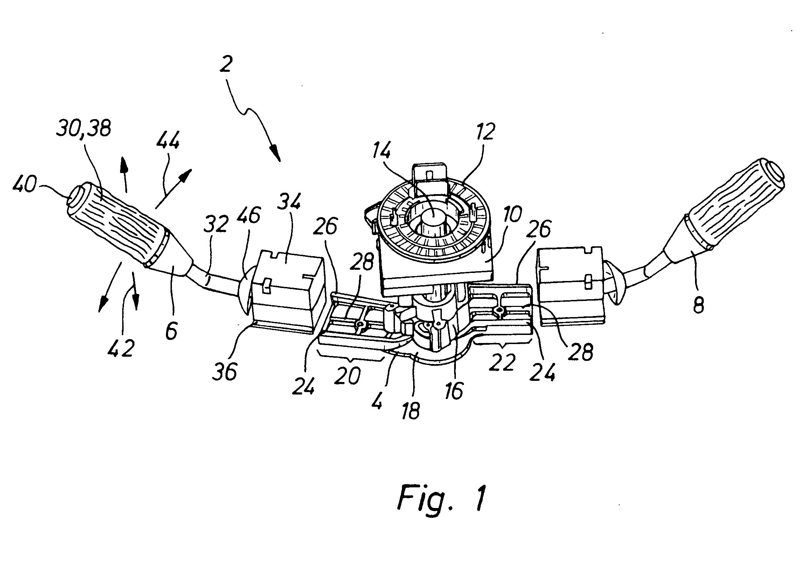

Das in Figur 1 allgemein mit dem Bezugszeichen 2 bezeichnete Lenksäulenmodul weist einen zentralen Modulträger 4 auf, der seitlich mit zwei als Lenkstockschalter 6, 8 ausgebildeten Betätigungsmodulen verbindbar ist und auf dem in Figur 1 oberhand dargestellt eine Elektronikeinheit 10 und eine Wickelkassette 12 konzentrisch zu einer in Figur 1 nur abschnittsweise dargestellten Lenksäule 14 angeordnet sind.

Der Modulträger 4 ist als Druckgussteil ausgebildet und weist einen zentrischen, weitgehend zylindrisch ausgebildeten Mantelabschnitt 16 auf, mit dem der Modulträger 4 an einem entsprechenden Abschnitt der Lenksäule 14 festlegbar ist. Der zylindrische Mantelabschnitt 16 grenzt an der der Elektronikeinheit 10 gegenüberliegenden Seite an einem Flanschabschnitt 18 an, der auf etwa gleicher Ebene angeordnet ist wie zwei Aufnahmebereiche 20 und 22, die auf in etwa gegenüberliegenden Seiten vom Mantelabschnitt 16 nach radial außen abstehen. Jeder der Aufnahmebereiche 20 und 22 weist Führungswangen 24 und 26 auf, die gemeinsam eine schwalbenschwanzförmige Nut bilden. Zwischen den Führungswangen 24 und 26 ist ein gitterförmiges Verstärkungselement 28 vorgesehen. Somit sind die Aufnahmebereiche 20 und 22 nach unten hin durch das Verstärkungselement 28 und seitlich durch die Führungswangen 24 und 26 begrenzt.

Die Lenkstockschalter 6 und 8 sind im Wesentlichen identisch ausgebildet und weisen jeweils ein Griffteil 30, eine Griffstange 32 und eine blockartige Halterung 34 mit einer Grundplatte 36 auf. Das Griffteil 30 weist ein Drehelement 38 auf, das um die Längsachse des Griffelements 30 herum in beiden Richtungen drehbar ist und tastend in beiden Richtungen Funktionen betätigen kann und ein an der freien Stirnseite des Lenkstockschalters 6 angeordnetes Drückelement 40, durch das weitere Funktionen auslösbar sind. Das Drehelement 38 und das Drückelement 40 sind gemeinsam am Griffteil 30 vorgesehen das an der Griffstange 32 gehaltert ist. Die Griffstange 32 ist aus ergonomischen Gründen leicht angewinkelt. Die Griffstange 32 ist wiederum mit der Halterung 34 verbunden, wobei auch in der Halterung 34 Tastschalter vorgesehen sein können, die durch Hubbewegungen (Bezugszeichen 42) beziehungsweise Schwenkbewegungen (Bezugszeichen 44) betätigbar sind. Zum Schutz der in der Halterung 34 angeordneten Tastschalter ist auf der Griffstange 32 eine die Tastschalter verdeckende Manschette 46 angeordnet.

Die Halterung 34 ist mit einer Grundplatte 36 verbunden, die ein zum Profil der Führungswangen 24 und 26 der Aufnahmebereiche 20 und 22 des Modulträgers 4 komplementäres Profil aufweist. Somit ist die Grundplatte 36 in den Aufnahmebereich 20 beziehungsweise 22 einsetzbar.

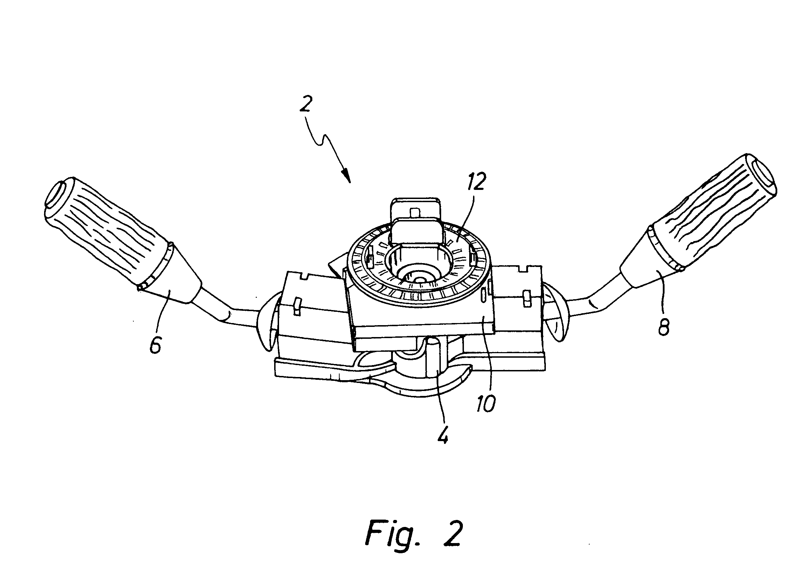

In Figur 2 ist das Lenksäulenmodul 2 in einem montierten Zustand dargestellt. Sichtbar sind der zentrisch angeordnete Modulträger 4, sowie die Lenkstockschalter 6 und 8 und die oberhalb des Modulträgers angeordnete Elektronikeinheit 10 beziehungsweise die Wickelkassette 12.

Selbstverständlich können die Lenkstockschalter 6 und 8 auch vertauscht angeordnet sein, so dass der Lenkstockschalter 6 im Aufnahmebereich 22 und der Lenkstockschalter 8 im Aufnahmebereich 20 anordenbar ist.

## Patentansprüche

1. Lenksäulenmodul (2), insbesondere für Kraftfahrzeuge, mit einem auf die Lenksäule (14) aufsetzbaren Modulträger (4) und mit mindestens einem mit dem Modulträger verbindbaren Betätigungsmodul (6), wobei der Modulträger (4) mindestens zwei jeweils zur Aufnahme eines Betätigungsmoduls geeignete Aufnahmebereiche (20, 22) aufweist, und wobei das Betätigungsmodul (6) einen Eingriffsbereich (36) zum Eingriff in einen Aufnahmebereich (20, 22) des Modulträgers aufweist, **dadurch gekennzeichnet, dass** der Eingriffsbereich (36) des Betätigungsmoduls (6) kompatibel mit mindestens zwei Aufnahmebereichen (20, 22) des Modulträgers (4) ist.

2. Lenksäulenmodul (2) nach Anspruch 1, **dadurch gekennzeichnet, dass** die Eingriffsbereiche (36) von mindestens zwei Betätigungsmodulen (6, 8) identisch sind.

3. Lenksäulenmodul (2) nach Anspruch 1 oder 2, **dadurch gekennzeichnet, dass** die nach außen nicht sichtbaren Teile von mindestens zwei Betätigungsmodulen (6, 8) identisch sind.

4. Lenksäulenmodul (2) nach einem der vorhergehenden Ansprüche, **dadurch gekennzeichnet, dass** die nach außen sichtbaren Teile von mindestens zwei Betätigungsmodulen (6, 8) kundenspezifisch ausgebildet sind.

5. Lenksäulenmodul (2) nach einem der vorhergehenden Ansprüche, **dadurch gekennzeichnet, dass** mindestens zwei Betätigungsmodule (6, 8) identisch sind.

6. Lenksäulenmodul (2) nach einem der vorhergehenden Ansprüche, **dadurch gekennzeichnet, dass** die Aufnahmebereiche (20, 22) des Modulträgers (4) identisch sind.

7. Lenksäulenmodul (2) nach einem der vorhergehenden Ansprüche, **dadurch gekennzeichnet, dass** der Modulträger (4) als Druckgussteil ausgebildet ist.

8. Lenksäulenmodul (2) nach einem der vorhergehenden Ansprüche, **dadurch gekennzeichnet, dass** die Aufnahmebereiche (20, 22) des Modulträgers (4) eine Schwalbenschwanz- oder T-Nut (24, 26) aufweisen, in die ein Betätigungsmodul (6, 8) mit seinem Eingriffsbereich (36) einführbar ist beziehungsweise der Eingriffsbereich eines Betätigungsmoduls (6, 8) eine Schwalbenschwanz- oder T-Nut aufweist, in die ein Aufnahmebereich des Modulträgers (4) einführbar ist.

9. Lenksäulenmodul (2) nach einem der vorhergehenden Ansprüche, **dadurch gekennzeichnet, dass** der Modulträger (4) zur Aufnahme von elektrischen Kontakten zu dem mindestens einen Modul (6, 8) und/oder von Zündschloss und/oder Zündanlassschalter und/oder Lenkradverriegelung und/oder einer Elektronikeinheit (10) und/oder einer Wickelkassette (12) und/oder Drehmoment- und/oder Lenkwinkelsensoren und/oder Verkleidungsteilen geeignet ist und/oder diese Elemente aufweist.

10. Lenksäulenmodul (2) nach einem der vorhergehenden Ansprüche, **dadurch gekennzeichnet, dass** mit oder sich an die Einführung eines Eingriffsbereichs (36) in einen Aufnahmebereich (20, 22) anschließend eine elektrische Kontaktierung des mindestens einen Betätigungsmoduls (6, 8) und des Modulträgers (4) erfolgt.

11. Lenksäulenmodul (2) nach einem der vorhergehenden Ansprüche, **dadurch gekennzeichnet, dass** die Funktionen des mindestens einen Betätigungsmoduls (6, 8) frei programmierbar sind.

12. Lenksäulenmodul (2) nach einem der vorhergehenden Ansprüche, **dadurch gekennzeichnet, dass** die Programmierung über eine Schnittstelle am Modulträger (4) erfolgt.

13. Lenksäulenmodul (2) nach einem der vorhergehenden Ansprüche, **dadurch gekennzeichnet, dass** die Schnittstelle am Modulträger (4) mit elektrischen Kontakten zu dem mindestens einen Betätigungsmodul (6, 8) und/oder zu einer Elektronikeinheit (10) in Verbindung steht.

14. Lenksäulenmodul (2) nach einem der vorhergehenden Ansprüche, **dadurch gekennzeichnet, dass** mindestens ein Betätigungsmodul (6, 8) als Lenkstockschalter ausgebildet ist.

15. Lenksäulenmodul (2)nach Anspruch 14, **dadurch gekennzeichnet, dass** alle Funktionen des Lenkstockschalters (6, 8) über Tastschalter betätigbar sind.

16. Lenkstockschalter (6, 8) mit einem Eingriffsbereich (36) zum Eingriff in einen Aufnahmebereich (20, 22) eines auf eine Lenksäule (14) eines Kraftfahrzeugs aufsetzbaren Modulträgers (4) eines Lenksäulenmoduls (2), **dadurch gekennzeichnet, dass** alle Funktionen des Lenkstockschalters (6, 8) über Tastschalter betätigbar sind.

17. Auf eine Lenksäule (14) eines Kraftfahrzeugs aufsetzbarer Modulträger (4) eines Lenksäulenmoduls (2) mit mindestens zwei Aufnahmebereichen (20, 22), die jeweils zur Aufnahme eines Eingriffsbereichs (36) eines Betätigungsmoduls (6, 8) geeignet sind, **dadurch gekennzeichnet, dass** die Aufnahmebereiche (20, 22) des Modulträgers (4) identisch sind.

18. Modulträger (4) nach Anspruch 17, **dadurch gekennzeichnet, dass** der Modulträger (4) als Druckgussteil ausgebildet ist.

19. Modulträger (4) nach einem der Ansprüche 17 oder 18, **dadurch gekennzeichnet, dass** die Aufnahmebereiche eine Schwalbenschwanz- oder T-Nut (24, 26) aufweisen, in die ein Betätigungsmodul (6, 8) mit seinem Eingriffsbereich (36) einführbar ist beziehungsweise der Eingriffsbereich eines Betätigungsmoduls (6, 8) eine Schwalbenschwanz- oder T-Nut aufweist, in die ein Aufnahmebereich des Modulträgers (4) einführbar ist.

20. Modulträger (4) nach einem der Ansprüche 17 bis 19, **dadurch gekennzeichnet, dass** der Modulträger (4) zur Aufnahme von elektrischen Kontakten zu dem Betätigungsmodul (6, 8) und/oder von Zündschloss und/oder Zündanlassschalter und/oder Lenkradverriegelung und/oder einer Elektronikeinheit (10) und/oder einer Wickelkassette (12) und/oder Drehmoment- und/oder Lenkwinkelsensoren und/oder Verkleidungsteilen geeignet ist und/oder diese Elemente aufweist.
